# EUROPEAN PATENT APPLICATION

(11) **EP 2 333 884 A1**
(43) Date of publication of application: **15.06.2011**
(21) Application number: 09177150.1
(22) Date of filing: 26.11.2009
(51) Int. Cl.: H01M 6/06, H01M 6/22, H01M 6/24, H01M 4/06, H01M 4/36, H01M 4/38, H01M 4/46, H01M 4/48, H01M 4/62, H01M 4/02, H01M 4/66, H01M 6/12

(54) **Al/H2O2 battery**

(71) Applicant: Celaya, Emparanza y Galdos Internacional, S.A., 01013 Vitoria Alava (ES); MIBD Ltd., 31253 Haifa (IL)
(72) Inventor: Silberman, Alexander, 31253, HAIFA (IL); Kalzuzhny, Valentine, 31253, HAIFA (IL); Cantero Uribe-Echeberria, Igor, 01013, VITORIA (ALABA) (ES); Bengoechea Gorrochategui, Miguel, 20009, DONOSTIA (Guipúzcoa) (ES); Blazquez Martin, J. Alberto, 20009, Donostia (Guipúzcoa) (ES)
(74) Representative: ZBM Patents

(57) **Abstract**

A primary battery for the production of electric energy provided with an aluminium or aluminium alloy electrode as negative electrode and a positive electrode containing hydrogen peroxide.

## Description

The present invention relates to a primary battery (i.e. non-rechargeable) for the production of electric energy provided with an aluminium or aluminium alloy electrode as negative electrode and a positive electrode containing hydrogen peroxide.

### BACKGROUND ART

It is known that aluminium batteries have the problem of self discharge. It as been described that for basic electrolyte, i.e. when manganese for negative electrode is used, there is no solution to aluminium corrosion (c.f. Muller S. et col., Journal of Applied Electrochemistry 26 (1996) 1217 - 1223).

Hydrogen peroxide is a strong oxidant which is extremely unstable in strongly alkaline solutions and very quickly reacts with anode materials of current interest, such as aluminium alloys.

US 5445905 relates to a battery comprising an aqueous hydrogen peroxide catholyte, an aqueous alkali, seawater or a mixture of aqueous alkali and seawater as an anolyte, a porous solid electrocatalyst capable of reducing said hydrogen peroxide and separating said anolyte from catholyte to prevent hydrogen peroxide poisoning of the aluminium anode, and an aluminium anode.

In Journal of Power Sources 65 (1997) 207-212, aluminium/hydrogen peroxide electrochemical semi-fuel cells for undersea vehicle propulsion are described. The aluminium/hydrogen peroxide semi-fuel cells described use alkaline medium both in anode and cathode. The use of several electrocatalysts that enhance effective and efficient electrochemical reduction of hydrogen peroxide is also described, thus shifting the predilection of the peroxide from parasitic decomposition to desired high rate electrochemical reduction.

As it is known in the prior art, in designing a system to incorporate Al-H₂0₂, the hydrogen peroxide presents a problem not typically associated with solid cathode materials such as silver oxide; specifically, unless isolated with a separator, the solution phase peroxide is in contact with both the aluminium anode and the cathode. Thus, the peroxide can create non-electrochemical energy producing chemical pathways for the consumption of reactive anode and cathode materials. Particularly relevant are:
i) corrosion reaction of the aluminium in basic medium:
   2AI(ₛ) + 2H₂0 + 20H- → 2A10₂⁻ + 3H₂(g)
ii) direct reaction of aluminium with hydrogen peroxide:
   2AI₍ₛ₎ + 3HO₂⁻→ 2A10₂ + OH⁻ + H₂0
iii) parasitic homogeneous self-decomposition of the hydrogen peroxide:
   2H₂0₂ → 0₂(g)⁺ 2H₂0

These non-current producing reactions lead to losses of reactants and subsequently to reduce energy output from the cell. Further, they lead to an undesired heat generation in the cell, and to a rise in anode potential, which reduces the cell voltage.

In order to have viable Al-Hydrogen peroxide semi-fuel cells, the efficiency of the electrochemical reactions must be maximized and the effects of the parasitic reactions minimized. From what is known in the art, it is desired that a primary battery capable to both have high energy density and current density would be of great interest in the field of electric energy.

### SUMMARY OF THE INVENTION

The inventors of the present invention have found that the above mentioned properties are achievable with a primary battery comprising a negative electrode containing aluminium, an aluminium alloy or mixture of aluminium alloys with an acid electrolyte; a positive electrode containing hydrogen peroxide or any other peroxide or mixture of peroxides with an acid electrolyte; and a polymer cation exchange membrane as separator.

The use of a stable peroxide composition for negative electrode instead of widely used manganese allows increase not only the primary battery energy density but also current density. Furthermore, when using acid electrolyte for the negative electrode, no aluminium corrosion occurs avoiding, therefore, the known problems of aluminium batteries self discharge when basic electrolyte is used.

Accordingly, a first aspect of the invention relates to an acid primary aluminium battery comprising:
i) a negative electrode comprising an active material selected from the group consisting of aluminium metal and aluminium alloys; and a negative electrode acid gel;
ii) a positive electrode comprising an acid gel containing hydrogen peroxide;
iii) a cation exchange membrane positioned to separate said negative electrode acid gel from said positive electrode acid gel.

A second aspect of the invention relates to a positive electrode for a primary aluminium battery comprising:
i) a positive electrode acid gel containing 5-30 mole/litre of hydrogen peroxide;
ii) a carbonaceous based positive electrode collector electrically contacted with the positive electrode acid gel;
wherein the hydrogen peroxide being dissolved in a aqueous solution containing at least one inorganic acid selected from phosphoric acid, sulfuric acid and nitric acid or their salts or mixture thereof; at least one stabilizer selected from metal cations and organic and inorganic complexing agents; at least one radical scavenger; and at least one surfactant.

### DETAILED DESCRIPTION OF THE INVENTION:

As mentioned above, the negative electrode contains at least one kind of active material selected from the group consisting of aluminium metal, an aluminium alloy or a mixture of aluminium alloys as current collector.

In an embodiment of the present invention, the purity of aluminium metal is equal or higher than 99.5 %, preferably equal or higher than 99.8 %.

According to an embodiment of the present invention, the aluminium alloys considered in the present invention are aluminium alloys which contain as major alloying elements an element selected from the group consisting of indium, gallium, zinc, magnesium, manganese, tin, calcium, zirconium, titanium, lead, phosphorous, and silicon and mixtures thereof, plus the unavoidable impurities.

The presence of indium in the alloy lead to a decrease of corrosion rates on open circuit potential and on load, and the shifts potential to more negative. In an embodiment, the concentration of indium in the alloy is between 0.025-0.2 % w/w.

The presence of gallium in the alloy shifts the potential to more negative. In an embodiment, the concentration of gallium in the alloy is between 0.001-0.05 % w/w.

The presence of indium and gallium as alloying elements has definite synergistic effect as for potential shift. Therefore, in an embodiment of the present invention, the aluminium alloys contain as major alloying elements indium and gallium.

The presence of zinc in the alloy shifts the potential to more negative. In an embodiment, the concentration of zinc in the alloy is between 0.5-5 % w/w.

The presence of magnesium in the alloy shifts the potential to more negative. In an embodiment, the concentration of magnesium in the alloy is between 0.1 - 5% w/w.

The presence of manganese was shown to increase tolerance to iron content due to formation of FeMnAl₆ phase having advantage over FeAI₃ in spherical shape and potential closer to that of aluminium. In an embodiment, the concentration of manganese in the alloy is between 0.02-0.2 % w/w.

The presence of tin in the alloy, depassivates aluminium surface, though increases corrosion rate. In an embodiment, the concentration of tin in the alloy is between 0.05 - 0.1 % w/w.

The presence of calcium in the alloy increases the coulombic efficiency. In an embodiment, the concentration of calcium in the alloy is between 0.005-0.45 % w/w.

Zirconium and titanium have the effect of grain refiners in the alloy, and their presence increases the coulombic efficiency. In an embodiment, the concentration of zirconium in the alloy is between 0.01 -1 % w/w. In an embodiment, the concentration of titanium in the alloy is between 0.01 -1 % w/w.

The presence of lead in the alloy increases the coulombic efficiency. In an embodiment, the concentration of lead in the alloy is between 0.01-0.2 % w/w.

The presence of phosphorous in combination with gallium/indium shifts potential to more negative simultaneously decreasing corrosion rate on load. In an embodiment, the concentration of phosphorous in the alloy is between 0.1-1 % w/w

The presence of silicon in the alloy improves uniformity of aluminium anodic dissolution. In an embodiment, the concentration of silicon in the alloy is between 0.01-1 % w/w

Those negative electrodes containing an aluminium-zinc-indium alloy are preferred. Particularly preferred are those wherein the aluminium-zinc-indium alloy containing between 0.5-5 % w/w of zinc, and 0.025-0.2 % w/w of indium.

According to an embodiment of the present invention, the negative electrode acid gel comprises at least one organic or inorganic acid as defined below or salts thereof, or mixtures thereof to provide ionic conductivity; halogen ions to prevent aluminium surface passivation; and at least one corrosion inhibitor and at least one thickener.

In an embodiment, the organic acid of the negative electrode acid gel is a carboxylic acid selected from the group consisting of oxalic acid and a carboxylic acid having a general structure of R[COOH]n wherein R is a radical selected from the group consisting of:
- hydrogen;
- linear or branched (Cₗ-C₈)alkyl optionally substituted by at least one OH, CO, a (C₁-C₄)alkylsulfonic acid group, and a (C₁-C₄)alkylphosphonic acid group;

- a -(C₁-C₈)alkyl-COOH, optionally substituted by at least one OH, CO, (C₁-C₄)alkylsulfonic acid group, and a (C₁-C₄)alkylphosphonic acid group, and a (C₁-C₄)alkylcarboxylic acid group; and
- a saturated, partially unsaturated or aromatic ring having 5-6 members being each one of the members of the ring selected from C and N, being the radical optionally substituted by at least one substituent selected from the group consisting of OH, CO, carboxyl group (optionally substituted by a hydroxyl radical, a sulfonic acid group, or a phosphonic acid group), amino group (optionally substituted by a (C₁-C₄)alkyl group), tertiary ammonium base group, nitro group, diazo group, mercapto group, sulfonic acid group, and phosphonic acid group;
and n is an integer from 1 to 2;
In a preferred embodiment, the organic acid of the negative electrode acid gel is a carboxylic acid selected from the group consisting of oxalic acid and a carboxylic acid having a general structure of R[COOH]n wherein
R is a radical selected from the group consisting of
- hydrogen;
- linear or branched (C₁-C₄)al kyl optionally substituted by at least one OH, CO, a sulfonic acid group, and a phosphonic acid group;
- (C₁-C₄)alkyl-COOH, optionally substituted by at least one OH, CO, a (C₁-C₄)alkylsulfonic acid group, a (C₁-C₄)alkylphosphonic acid group, and a (C₁-C₄)alkylcarboxilic acid;
and n is an integer from 1 to 2.

In a more preferred embodiment, the organic acid of the negative electrode acid gel is selected from acetic acid, formic acid, glycolic acid, glyoxalic acid, oxalic acid, malonic acid, maleic acid, fumaric acid, mesoxalic acid, citric acid. Particularly preferred is oxalic acid.

According to another embodiment, the negative electrode acid gel contains an inorganic acid or salt thereof which is selected from aluminium sulphate, zinc sulphate, aluminium nitrate, zinc nitrate, sulfuric acid, nitric acid or mixtures thereof.

The halogen ions present in the negative electrode acid gel come from a source of chlorine, iodine, fluorine or bromine. Preferably the source of halogen ions is selected from hydrogen chloride, hydrogen bromide, hydrogen iodide, hydrogen fluoride. Most preferably the source of halogen ions is hydrogen chloride.

As corrosion inhibitors different compounds can be used, for example
a) an organic compound selected from a linear or branched (C₁-C₆)alkyl compound; a saturated, partially unsaturated or aromatic ring having 5-6 members, being each one of the members of the ring selected from C and N; being such organic compound substituted with at least one functional group selected from the group consisting of a sulfonic acid (-SO₃H), a phosphonic acid (-PO₃H), hydroxyl group (-OH), nitro group (-NO₂), an aldehyde group (-CHO), a ketone group (-CO-);
b) an (C₂-C₆)alkyne;
c) derivatives of propargyl alcohol having general structure. 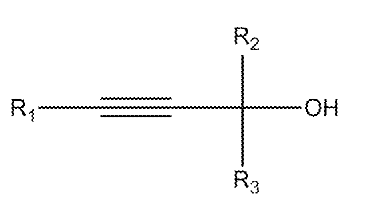 where R₁, R₂, R₃ are hydrogen or aliphatic or aromatic (C₁-C₄)alkyl radical optionally substituted, wherein the substituent is selected from -OH, -SO₃H, - PO₃H, -NO₂, and -CHO; optionally R₂ and R₃ may be joined together forming a cycloalkyl ring;
d) acetylenic sulfide having general structure 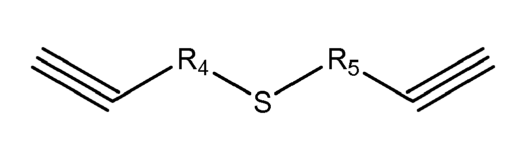 where R₄ and R₅ are (C₁-C₄)aliphatic or aromatic alkyl radical optionally substituted, wherein the substituent is selected from -OH, -S0₃H, -P0₃H, - N0₂, and -CHO;
e) nitrogen containing compounds including nitrogen containing heterocyclic compounds and/or compounds having a functional group such as: amino group (-NH₂), imino group (=NH), diazo group (-N=N-), azide group (-N₃); salts, N-substituted derivatives and derivatives thereof.

Preferably, the corrosion inhibitor is selected from methyl alcohol, ethyl alcohol, propyl alcohol, butyl alcohol, phenol, salicyc acid, sulfosalycic acid, glycerol, ethylene glycol, nitromethane, sulfobenzoic acid, sulfoaniline, vinyl sulfonate, polyvinyl alcohol, polystyrene sulfonic acid, polyvinyl sulfonic acid, amino-tris (methylenephosphonic acid), diethylenetriamine-penta-methylene phosphonic acid, etidronic acid, 2-hydroxy phosphono acetic acid, formaldehyde, benzaldehyde, butyraldehyde, glyoxal, acetone, methylethylketone, cyclohexanone, diacetone alcohol, acetophenone, propargyl alcohol, hexynol, dimethylhexynol, dimethylhexynediol, dimethyloctynediol, methylbutynol, methylpentynol, ethynyl cyclohexanol, phenylbutynol, dipropargyl sulfide, bis (1-methyl-2-propynyl) sulfide, bis (2-ethynyl-2-propyl) sulfide, pyridine, pyrazon, triazine, quinoline, acridine, acridone, aniline, dipyridyl, pyrollidine, pyrazole, imidazole, thoriazole, diphenylamine, azobenzene, quinaldine, quinine, amino quinoline, oxyindole, benzothiazole, benzotriazole, oxyquinoline, acetamide, 1,10-phenanthroline, succinimide, and 5-amino-3-heptyl-1,2,4-triazole.

According to an embodiment of the present invention, the thickener is selected from carboxymethylcellulose, starch, acrylic acid polymers, polyurethane thickeners, and fumed silica.

According to a preferred embodiment of the invention, the positive electrode comprises an acid gel and a collector which is electrically contacted with this acid gel, and a positive electrode comprising as current collector a carbonaceous material, preferably selected from graphite, carbon black, activated carbon or mixtures thereof. Preferably, the positive electrode is a carbon rod. According to a preferred embodiment, the positive electrode current collector comprises a mixture of graphite powder and carbon black taken in ratio from 4:1 to 1:4, more preferably 1:1 to 3:1. Particularly preferred 2.5:1.

According to an embodiment of the present invention, the positive electrode acid gel comprises
- hydrogen peroxide or any other peroxide or mixture of peroxides;
- at least one inorganic acid selected from phosphoric acid, sulfuric acid and nitric acid or their salts or mixture thereof to provide electrical conductivity;
- at least one stabilizer selected from metal cations and organic or inorganic complexing agents, and mixtures thereof;
- at least one radical scavenger; and
- at least one surfactant.

Optionally the positive electrode acid gel comprises a conductive agent which is selected from graphite, carbon black, activated carbon and mixtures thereof. The content of the conductive agent in the positive electrode acid gel is preferably between 0-40 % w/w.

The content of the hydrogen peroxide or any other peroxide or mixture of peroxides in the positive electrode acid gel is between 5-30 mole/litre, preferably between 10-20 mol/litre, more preferred15 mole/litre. Being the peroxide particularly preferred hydrogen peroxide.

According to a particular embodiment, the stabilizer is selected from metal cations which are selected from tin, zirconium, tantalum, and niobium cations.

In another particular embodiment, the stabilizer is selected from organic complexing agents which are organic compounds containing carboxylic group, nitrogen, phosphonic acid group, phenolic hydroxyl. Preferably, the organic complexing agents are selected from citric acid, tartaric acid, ethylenediamine-tetraacetic acid, diethylenetriamine pentacetic acid, salicylic acid, sulfosalycilic acid, oxyquinoline, dipyridyl, 8-anilino-1-naphthalenesulfonic acid, nitrilotri-(methylphosphonic acid), etidronic acid, diethylenetriamine-penta-(methylphosphonic acid) (DTPMP), hexamethylenediamine-tetra-(methylenephosphonic acid), and 1,4,7,10-tetraazacyclododecane-1,4,7,10-tetra-(methylenephosphonic acid).

According to another particular embodiment, the stabilizer is selected from inorganic complexing agents which are acid anions, preferably selected from ion phosphate, ion pyrophosphate, ion polyphosphate, and ion silicate.

According to a particular embodiment of the invention, the stabilizer is a mixture of potassium stannate and DTPMP

In an embodiment of the present invention, the radical scavenger is a water soluble derivative of a sterically hindered phenol derivative of formula (A) or a sterically hindered iminoxyl stable free radical of formula (B) or salts thereof or mixtures thereof 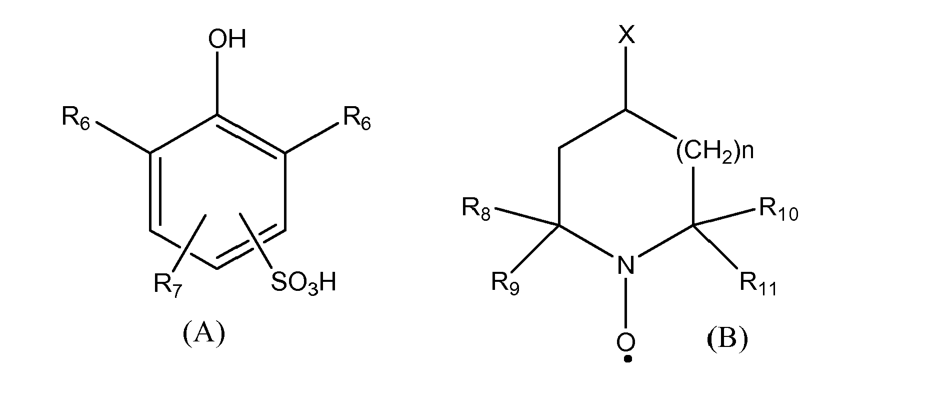 wherein R₆ and R₇ in the phenol derivative of formula (A) are as defined below:
R₆ is selected from the group consisting of a (C₁-C₆) tertiary aliphatic or aromatic radical either substituted or not by a hydroxyl radical; preferably tert-butyl, and tert-pentyl;
R₇ is hydrogen or organic moiety selected from the group consisting of a (C₁-C₆) aliphatic or aromatic radical either substituted or not by a hydroxyl radical; preferably R₇ is a (C₁-C₄) alkyl radical.

A preferred sterically hindered phenol derivative of formula (A) is 3,5-di-tertbutyl, 4-hydroxy benzenesulfonic acid potassium salt (BHBS-K).

And wherein R₈-R₁₁ and X in the iminoxyl radical of formula (B) are as defined below:
R₈-R₁₁ are independently a radical selected from an (C₁-C₆) aliphatic or aromatic radical; preferably selected from methyl, ethyl, propyl, and phenyl;
and X is selected from the group consisting of:
i) hydrogen,
ii) -OR₁₂, wherein R₁₂ is selected from hydrogen, (C₁-C₄) alkyl, an (C₁-C₆) acylic radical, and an aromatic ring having 5-6 members, being each one of the members of the ring selected from C and N;
iii) -NR₁₃R₁₄ where R₁₃ and R₁₄ are selected from hydrogen, (C₁-C₄) alkyl, an (C₁-C₆) acylic radical, and an aromatic ring having 5-6 members, being each one of the members of the ring selected from C and N;
iv) quaternary ammonium salt **(-N⁺R,₅R₁₆R₁₇)** where R₁₅, R₁₆, R₁₇ are selected form hydrogen, (C₁-C₄) alkyl, an (C₁-C₆) acylic radical, and an aromatic ring having 5-6 members, being each one of the members of the ring selected from C and N;
v) oxo group (=0),
vi) -COOR₁₈ where R₁₈ is selected from hydrogen; (C₁-C₄) alkyl, -NR₁₃Rₗ₄, and an aromatic ring having 5-6 members, being each one of the members of the ring selected from C and N;
vii) -S0₂0R₁₉ where R₁₉ is selected from hydrogen, (C₁-C₄) alkyl, -NR₁₃Rₗ₄, and an aromatic ring having 5-6 members, being each one of the members of the ring selected from C and N;
viii) -PO(OR₂₀)(OR₂₁ ) where R₂₀, R₂₁ is selected from (C₁-C₄) alkyl, -NR₁₃Rₗ₄, and an aromatic ring having 5-6 members, being each one of the members of the ring selected from C and N;
and wherein n is an integer form 0 to 2; preferably n = 1.

According to a preferred embodiment, the radical scavenger is a water soluble derivative of a sterically hindered phenol derivative selected from the group consisting of 2,6-di-tert-butyl-phenol-4-sulfonic acid (BHBS-K), 2,6-ditert-butyl-phenol-3-sulfonic acid 2,6-di-tert-butyl-phenol-4-methyl-3-sulfonic acid, 2,6-di-tert-butyl-phenol-4-ethyl-3-sulfonic acid, 2,6-di-tert-pentyl-phenol-4-sulfonic acid, and 2,6-di-tert-pentyl-phenol-4-methyl-3-sulfonic acid, and salts thereof.

According to a preferred embodiment, another radical scavenger is a water soluble derivative of stable iminoxyl radical selected from the group consisting of 4-hydroxy-2,2,6,6-tetramethylpiperidine 1-oxyl (4-OH-TEMPO), 4-carboxy-2,2,6,6-tetramethylpiperidine 1-oxyl, 4-phosphonooxy-2,2,6,6-tetramethyl-1-piperidine 1-oxyl.

According to an embodiment of the invention, the surfactant is selected from non-ionic surfactants, cationic surfactants and amphoteric surfactants. In a preferred embodiment, the surfactant is selected from:
a) non-ionic surfactants selected from the group consisting of ethoxylates such as alcohol ethoxylates of formula R₂₂(OCH₂CH₂)n₂0H, wherein R₂₂ is a (C₁-C₂₂)alkyl radical and n₂ is an integer from 1 to 70; alkyl phenol ethoxylates of formula R₂₃C₆H₄(OCH₂CH₂)n₂0H wherein R₂₃ is a (C₁-C₂₂)alkyl radical and n₂ is an integer from 1 to 70; glycerol esters of fatty acids; polyoxyethylene esters of rosin, tall oil and fatty acids, ethoxylated anhydrosorbitol esters; ethoxylated natural fats, oils and waxes; carboxylic amides; diethanolamine condensates; monoethanol amine condensates; polyoxyethylene fatty acid amides; polyalkylene oxide polymer and block copolymers;
b) cationic surfactants selected from the group consisting of oxygen free mono and dialkyl amines; oxygen containing amines such as alkyl amine ethoxylates and alkyl amine oxides; rosin and aliphatic amine ethoxylates; 2-alkyl-1-(2-hydroxyethyl)-2-imidazolines; amines with amide linkages, and quatenary ammonium salts;
c) amphoteric surfactants selected from the group consisting of both an acidic and basic hydrophillic group including imidazolinum derivatives; alkyl betaines; amidopropylbetaines; sulfobetaines; sulfotaines, and the like.

According to an embodiment of the present invention, the proton exchange membrane positioned to separate said negative electrode acid gel from said positive electrode acid gel is selected from a pure polymer and a non woven polymer separator impregnated by proton exchange membrane (PEM). In a preferred embodiment, the separator is selected from a sulfonated tetrafluoroethylene based fluoropolymer-copolymer (Nafion type co-polymer), a sulfonated polysulfone optionally blended with polivinilidenofluoruride (PVDF), polysulfostyrene grafted to polivinilidenofluoruro (PVDF-HFP), sulfonated poly(arylene ether sulfone), sulfonated naphthalenic polyimide, imidazole-terminated ethylene oxide oligomer, sulfonated polybenzimidazoles, and sulfonated polyphosphazene and the respective hybrid proton conducting membranes and the others ionomers.

According to a preferred embodiment, the PEM is a Nafion type co-polymer such as Nafion 212.

The thickness of the PEM should preferably be confined within the range of 1 to 200 µm, more preferably from 10 to 150 µm.

Application of proton exchange membrane as separator allows transport of protons through the membrane and prevents from peroxide crossover from cathode gel to anode gel.

The primary battery could be produced in two main shapes: cylindrical type or coin type. For both types may contain packaging tube (possibly current collector), when packaging tube is made from plastics it will include aluminium alloy as current collector; anode acid gel; proton exchange membrane as separator; cathode acid gel; cathode graphite rod current collector; and an internal pressure release device to provide safety operation at high current (for example such as shown in US patent 7,273,675 B2).

The packaging tube also could be made from rigid material such as stainless steel and covered by graphite or protective plastic such as polyolefin or fluoropolymer or PVC or polysulfone or reinforced plastic.

Generally, taking as an example a composition of anode gel containing oxalic acid, total reaction in the battery is as follows:

3H₂O₂ + 2AI + 3(COOH)₂ - 6H₂O + A1₂((COO)₂)₃

partially cathode reaction is as follows:

H₂0₂ + 2H⁺ +2e⁻ → 2H₂0 (U Vs. Ag/AgCl is 0.55 V);

and anode reaction is as follows:

2Al + 3(COOH)₂ - 6e⁻ → A1₂((COO)₂)₃ + 6H⁺ (U Vs. Ag/AgCl is 1,0 V)

Thus, taking anode composition containing oxalic acid with concentration as high as 90 %, we obtain energy density 650 Ah/I. Whereas 15 mole/I hydrogen peroxide cathode gel gives energy density as high as 820 Ah/I.

Electrical charge of cathode and anode half-cells should be preferably equal thus providing maximum energy density.

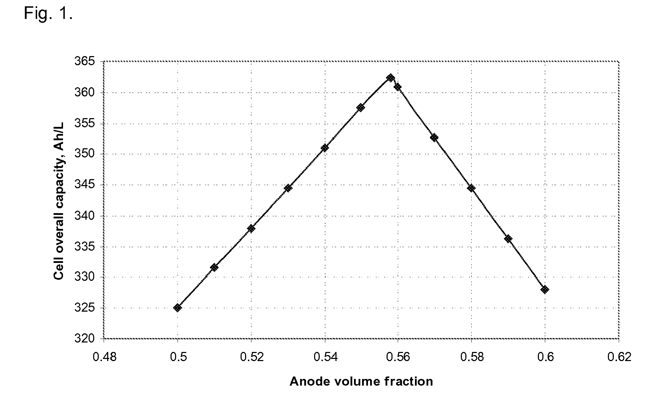

According to an embodiment of the present invention, the cathode/anode volume ration is from 0.5 to 0.6, preferably from 0.53 to 0.58; more preferred 0.550 to 0.570. In a particularly preferred embodiment of the present invention, cathode/anode volume ration is 0.558. Taking cathode/anode volume ratio as 0.558 we obtain battery with 363 Ah/I (see Fig.1) which is equal to 363 Ah/L * 1.5 V = 562 Wh/I when cell discharges at 1.5 V.

Throughout the description and claims the word "comprise" and variations of the word, such as "comprising", are not intended to exclude other technical features, additives, components, or steps.

Furthermore, the present invention covers all possible combinations of particular and preferred groups described hereinabove.

Additional objects, advantages and features of the invention will become apparent to those skilled in the art upon examination of the description or may be learned by practice of the invention. The following examples are provided by way of illustration, and are not intended to be limiting of the present invention.

### BRIEF DESCRIPTION OF THE DRAWINGS

Figure 1. Cell capacity vs. anode volume fraction.
Figure 2. Results of cathode stability tests.
Figure 3. Discharge curve of an AA cell using the Al / H202 system. One ampere continuously is applied during the test.
Figure 4. Comparative discharge curves of AA cells using Al / H₂0₂ and Zn / Mn0₂ systems. One ampere continuously is applied during both tests. A higher potential and more capacity is clearly obtained when Al/H₂0₂ system is used.

### DETAILED DESCRIPTION OF PARTICULAR EMBODIMENTS

### Example 1. Catholyte.

To prepare 1 L of Cathode electrolyte:
730 g of Hydrogen peroxide 70 % w/w aqueous solution and 294 g of ortho-Phosphoric acid 85% w/w aqueous solution were mixed. To thus obtained solution 2.51 g of Potassium stannate trihydrate, 1.00 g of 4-Hydroxy-2,2,6,6-tetramethylpiperidine 1-oxyl, 0.500 g of 2,6-di-tert-butyl-phenol-4-sulfonic acid potassium salt and 50 mg of Sodium dodecylsulfate were added. The solution was stirred until all components dissolved completely and diluted to 1 L with distilled water.

### Example 2. Cathode gel

### Different examples of cathode gel were prepared as follows.

### Cathode gel 1.

3.00 g of graphite powder was mixed with 7.00 g of Catholyte and thoroughly homogenized in mortar.

### Cathode gel 2.

1.70 g of graphite powder was mixed with 1.30 g of carbon black and thoroughly homogenized in mortar. 7 g of Catholyte was added to thus obtain carbon mixture and thoroughly homogenized in mortar.

### Cathode gel 3.

2.25 g of graphite powder was mixed with 0.090 g of carbon black and thoroughly homogenized in mortar. 6.85 g of Catholyte was added to thus obtain carbon mixture and thoroughly homogenized in mortar.

### Example 3. Anode gel.

7.8 g of 2,2'-bipyridyl was dissolved in 835 g of distilled water. To thus obtain solution 50 mg of Sodium dodecylsulfate, 4.9 g of Hydrochloric acid 37 % w/w aqueous solution and 305 g of 98% w/w Sulphuric acid were added. After the solution had cooled down 400 g anhydrous Oxalic acid was added. Thus obtained mixture was thoroughly homogenized in mortar.

### Example 4. Electrochemical cells

### Example 4.1

Coin shape electrochemical cell is assembled from graphite plate cathode current collector, layer of Cathode gel 1, cation exchange membrane, layer of Anode gel and plate of anode alloy stacked together in an appropriate cylindrical casing having internal diameter of 21 mm, and thus effective area of anode, cathode current collector and membrane equal to 3.46 cm².

### Example 4.2.

Electrochemical cell was assembled in the same manner as in Example 1 but with Cathode gel 2.

### Example 4.3.

Electrochemical cell was assembled in the same manner as in Example 1 but with Cathode gel 3.

**Table 1. The effect of carbon type on cell internal resistance.**

| | OCV, V | Cell voltage, V at 150 mA / g cathode |
|---|---|---|
| Example 4.1 | 1.55 | 0.65 |
| Example 4.2 | 1.58 | 0.88 |
| Example 4.3 | 1.58 | 0.86 |

Comparing examples shown in Table 1 straights influence of carbon type on cell internal resistance. Preferable carbon type is a mixture of graphite powder and carbon black taken in ratio 2.5:1.

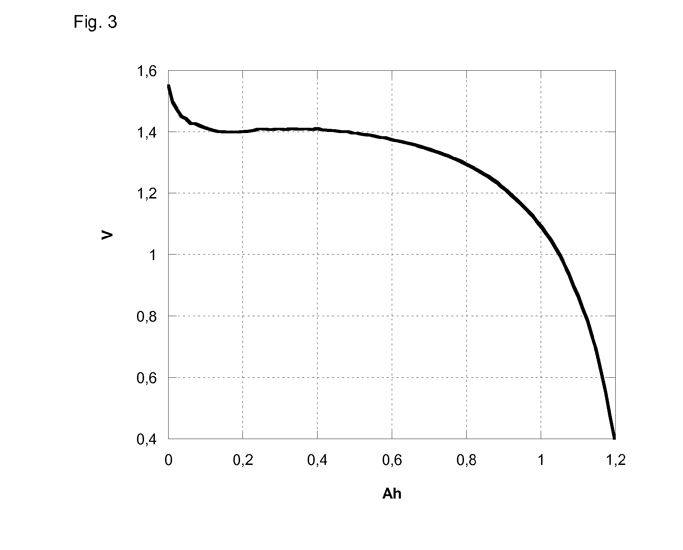

Figure 3 shows the discharge curve of an AA cell using the Al/H₂0₂ system of example 4.3.

### Example 5. Stability tests

Cathode gel materials were subjected to accelerated stability study at 70°C. Assuming hydrogen peroxide decomposition rate to increase by factor 2.2 each 10°C, time spent at 70°C is equivalent to 60.34 of time spent at 18°C.

### Stability test 1:

Unstabilized electrolyte prepared from having 15 mole/L of Hydrogen peroxide and 250 g/L of ortho-phosphoric acid.

73 g of 70% w/w aqueous Hydrogen peroxide was mixed with 29.4 g of 85% w/w aqueous ortho-phosphoric acid. Thus obtained solution was diluted to 100 ml with distilled water.

### Stability test 2:

Catholyte.

### Stability test 3:

Cathode gel 1 from Example 1.

### Stability test 4:

Cathode gel 2 from Example 1.

### Stability test 5:

Cathode gel 3 from Example 1.

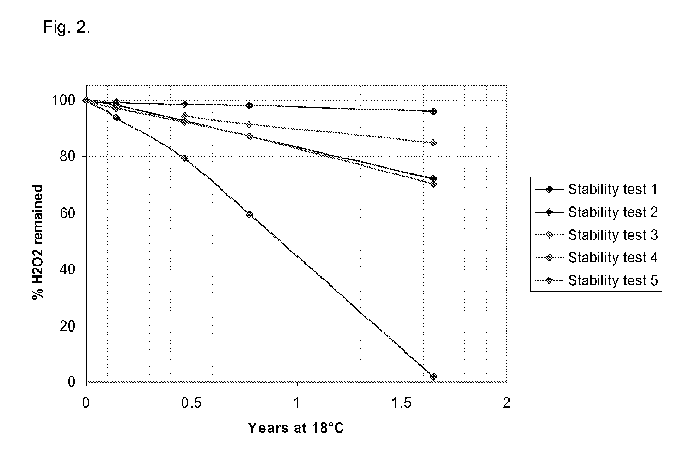

Results of cathode stability test are shown in Figure 2.

### Example 6. Battery composition

### 6.1 Electrode positive (cathodic electrolyte)

Different cathodic electrolyte compositions (C. Electrolyte 1-3) were prepared according to the invention. Table 2 shows the composition thereof.

**Table 2.- Electrode positive (cathodic electrolyte)**

| | | **C. Electrolyte 1** | **C. Electrolyte 2** | **C. Electrolyte 3** |
|---|---|---|---|---|
| **Active material** | Hydrogen peroxide | 15 mol/L | 15 mol/L | 15 mol/L |
| **Electrolyte** | Ammonium sulphate | 150 g/L | --------- | --------- |
| | Phosphoric acid | --------- | 250 g/L | 250 g/L |
| **Inorganic stabilizer** | Potassium stannate | 0,8 g/L (as Tin) | 1,0 g/L (as Tin) | 1,0 g/L (as Tin) |
| **Complexing agent** | DTPMP | 5,0 g/L | --------- | --------- |
| **Radical scavenger (stabilizer)** | 4-HO-TEMPO | --------- | 1,0 g/L | 0,8 g/L |
| | BHBS-K | 0,5 g/L | 0,5 g/L | 3,0 g/L |
| **Surfactant** | SDS | 0,05 g/L | 0,05 g/L | 0,05 g/L |

| | | | | |
|---|---|---|---|---|
| DTPMP: Diethylenetriamine-penta-(methylphosphonic acid) 4-HO-TEMPO: 4-hydroxy-2,2,6-tetramethylpiperidine 1-oxyl BHBS-K: 2,6-di-tert-butyl-phenol-4-sulfonic acid potassium salt SDS: Sodium n-dodecyl sulphate | | | | |

### 6.2. Proton exchange membrane:

A sulfonated tetrafluoroethylene based fluoropolymer-copolymer, Nafion 212, was used as proton exchange membrane

### 6.3. Electrode negative (anodic electrolyte)

### 6.3.1.- Aluminium alloy: Al (96,5%) - Zn (3,5%) - In (0,05%)

Different electrode negative acid gel compositions (A. Electrolyte 1-3) were prepared according to the invention. Table 3 shows the composition thereof.

**Table 3.- Electrode negative acid gel**

| | | A. Electrolyte 1 | A. Electrolyte 2 | A. Electrolyte 3 |
|---|---|---|---|---|
| Electrolyte | Sulphuric acid | 3 mol/L | 19,2%w/w | 19,2 %w/w |
| Antipassivation agent | Hydrogen chloride | 0,05 mol/L | 0,12 %w/w | 0,12 %w/w |
| Corrosion inhibitor | 2,2'-bipyridyl | 0,05 mol/L | 0,52 %w/w | 0,52 %w/w |
| Surfactant | SDS | 0.003 % w/w | 0.003 % w/w | 0.003 % w/w |
| Organic acid | Oxalic acid | --------- | 25 %w/w | 25%w/w |

### Example 7. Comparative test

An AA cell using Al / H₂0₂ system according to example 4.3 and an AA cell using Zn / Mn0₂ system (standard cell) was prepared and their discharge curves were obtained. One ampere continuously was applied during both tests.

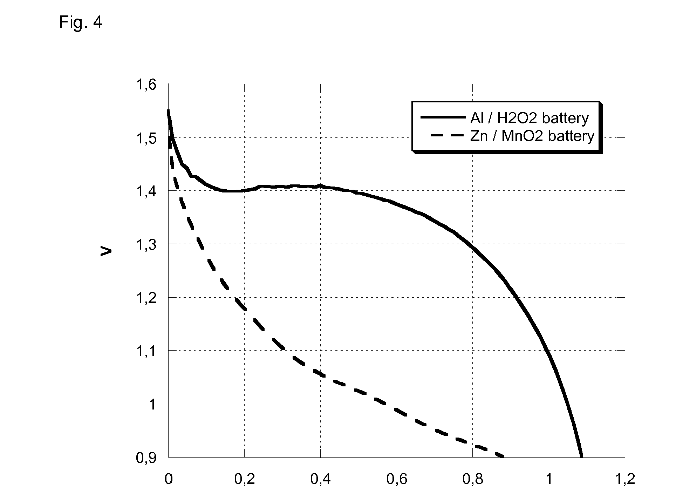

Figure 4 shows the comparative discharge curves obtained. A higher potential and more capacity is clearly obtained when Al/H₂0₂ system is used.

## Claims

1. A primary aluminium battery comprising:
i) a negative electrode comprising at least
a) an active material selected from the group consisting of aluminium metal and aluminium alloys, and
b) a negative electrode acid gel;
ii) a positive electrode comprising an acid gel containing hydrogen peroxide;
iii) a proton exchange membrane positioned to separate said negative electrode acid gel from said positive electrode acid gel.

2. The primary aluminium battery according to claim 1, wherein the negative electrode acid gel comprises:
i.b.1) at least one organic or inorganic acid or salt thereof, or mixtures thereof,
i.b.2) a source of halogen ions;
i.b.3) at least one corrosion inhibitor; and
i.b.4) at least one thickener.

3. The primary aluminium battery according to any of the claims 1-2, wherein the negative electrode acid gel comprises an organic acid or salt thereof (i.b.1) which is selected from the group consisting of oxalic acid and a carboxylic acid having a general structure of R[COOH]n wherein
R is a radical selected from the group consisting of
- hydrogen;
- linear or branched (C₁-C₄)alkyl optionally substituted by at least one OH, CO, a sulfonic acid group, and a phosphonic acid group;
- (C₁-C₄)alkyl-COOH, optionally substituted by at least one OH, CO, a (C₁-C₄)alkylsulfonic acid group, a (C₁-C₄)alkylphosphonic acid group, and a (C₁-C₄)alkylcarboxilic acid;
and n is an integer from 1 to 2.

4. The primary aluminium battery according to any of the claims 1-3 , wherein the negative electrode acid gel comprises an organic acid or salt thereof (i.b.1) which is selected from the group consisting of acetic acid, formic acid, glycolic acid, glyoxalic acid, oxalic acid, malonic acid, maleic acid, fumaric acid, mesoxalic acid, and citric acid.

5. The primary aluminium battery according to any of the claims 1-2, wherein the negative electrode acid gel contains an inorganic acid or salt thereof (i.b.1) which is selected from aluminium sulphate, zinc sulphate, aluminium nitrate, zinc nitrate, sulphuric acid, nitric acid and mixtures thereof.

6. The primary aluminium battery according to any of the claims 1-5, wherein the negative electrode acid gel comprises a source of halogen ions (i.b.2) which is selected from hydrogen chloride, hydrogen bromide, hydrogen iodide, and hydrogen fluoride.

7. The primary aluminium battery according to any of the claims 1-6, wherein the negative electrode acid gel comprises a thickener (i.b.4) which is selected from carboxymethylcellulose, starch, acrylic acid polymers, polyurethane thickeners, and fumed silica.

8. The primary aluminium battery according to any of the claims 1-7, wherein the negative electrode comprises as active material (i.a) aluminium metal with a purity equal or higher than 99.5 %, preferably equal or higher than 99.8 %.

9. The primary aluminium battery according to any of the claims 1-7, wherein the negative electrode comprises as active material (i.a) an aluminium alloy which contains as major alloying elements an element selected from the group consisting of indium, gallium, zinc, magnesium, manganese, tin, calcium, zirconium, titanium, lead, phosphorous, and silicon and mixtures thereof, plus the unavoidable impurities.

10. The primary aluminium battery according to claim 9, wherein the negative electrodes comprises as active material (i.a) an aluminium-zinc-indium alloy containing between 0.5-5 % w/w of zinc, and 0.025-0.2 % w/w of indium, plus the unavoidable impurities.

11. The primary aluminium battery according to any of the claims 1-10, wherein the positive electrode comprises an acid gel comprising 10-20 mol/litre of hydrogen peroxide.

12. The primary aluminium battery according to any of the claims 1-11, wherein positive electrode acid gel comprises an aqueous solution comprising:
a) hydrogen peroxide;
b) at least one inorganic acid selected from phosphoric acid, sulfuric acid and nitric acid or their salts or mixture thereof;
c) at least one stabilizer selected from metal cations and organic or inorganic complexing agents;
d) at least one radical scavenger; and
e) at least one surfactant.

13. The primary aluminium battery according to any of the claims 1-12, wherein the proton exchange membrane is selected from a sulfonated tetrafluoroethylene based fluoropolymer-copolymer, a sulfonated polysulfone optionally blended with polivinilidenofluoride (PVDF), polysulfostyrene grafted to polivinilidenofluoruro and sulfonated sulfonated poly(arylene ether sulfone), sulfonated naphthalenic polyimide, imidazole-terminated ethylene oxide oligomer, sulfonated polybenzimidazoles, and polyphosphazenes

14. The primary aluminium battery according to any of the claims 1-13, wherein:
i) the negative electrode comprises:
a) as active material an aluminium-zinc-indium alloy containing between 2.0-4.0 % w/w of zinc, and 0.04-0.6 % w/w of indium, plus the unavoidable impurities.
b) the negative electrode acid gel comprises:
i.b.1) oxalic acid, sulphuric acid or salts thereof, or mixtures thereof,
i.b.2) hydrogen chloride;
i.b.3) 2,2'-bipyridyl; and
i.b.4) a thickener selected from carboxymethylcellulose, starch, acrylic acid polymers, polyurethane thickeners, fumed silica, and mixtures thereof;
ii) the positive electrode acid gel comprises:
a) hydrogen peroxide;
b) phosphoric acid, sulfuric acid or their salts or mixture thereof;
c) a mixture of potassium stannate and diethylenetriaaminepentakis(methylphosphonic acid) (DTPMP);
d) 4-hydroxy-2,2,6,6-tetramethylpiperidine 1-oxyl (4-HO-TEMPO), 3,5-di-tertbutyl, 4-hydroxy benzenesulfonic acid potassium salt (BHBS-K) or mixture thereof as radical scavenger; and
e) sodium n-dodecyl sulphate (SDS).
iii) the proton exchange membrane is a sulfonated tetrafluoroethylene based fluoropolymer-copolymer.

15. A positive electrode for a primary aluminium battery comprising:
i) a positive electrode acid gel comprising:
a) 10-20 mole/litre of hydrogen peroxide;
b) at least one inorganic acid selected from phosphoric acid, sulphuric acid and nitric acid or their salts or mixture thereof;
c) at least one stabilizer selected from metal cations and organic or inorganic complexing agents;
d) at least one radical scavenger; and
e) at least one surfactant;
and
ii) a carbonaceous based positive electrode collector electrically contacted with the positive electrode acid gel.
